# EUROPÄISCHE PATENTSCHRIFT

(11) **EP 1 878 092 B1**
(45) Veröffentlichungstag und Bekanntmachung des Hinweises auf die Patenterteilung: **27.02.2013**
(21) Anmeldenummer: 06725101.7
(22) Anmeldetag: 16.03.2006
(51) Int. Cl.: H01R 4/64, B60R 16/02

(54) **MASSEVERBINDUNG**
EARTH CONNECTION
CONNEXION A LA MASSE

(30) Priorität: 26.04.2005 DE 102005019311
(43) Veröffentlichungstag der Anmeldung: 16.01.2008
(73) Patentinhaber: Robert Bosch GmbH, 70442 Stuttgart (DE)
(72) Erfinder: WIELAND, Thomas, 70193 Stuttgart (DE); KIRNER, Matthias, 70839 Gerlingen (DE); WYRWA, Knut, 71254 Ditzingen-Hirschlanden (DE)
(86) Internationale Anmeldenummer: PCT/EP2006/060788
(87) Internationale Veröffentlichungsnummer: WO 2006/114354

(56) Entgegenhaltungen:
- DE-A1- 3 102 640
- DE-A1- 10 065 542
- GB-A- 2 129 628
- US-A- 1 697 954
- US-B1- 6 716 040

## Beschreibung

### Stand der Technik

Die Erfindung geht aus von einer Vorrichtung zum Fördern von Kraftstoff mit einer Masseverbindung nach der Gattung des Hauptanspruchs.
Es ist schon eine Masseverbindung bekannt zur elektrischen Verbindung eines in einer elektrisch nichtleitenden Vorrichtung vorgesehenen elektrisch leitenden Teils mit einer elektrischen Masse. Nachteilig ist, dass die Masseverbindung mittels herkömmlicher elektrischer Kabel gebildet ist, deren Montage sehr aufwendig und teuer ist.

Aus der DE 10065542 A1 ist eine Kraftfahrzeug-Lampeneinheit mit einer Sammelschieneneinheit bekannt, die mit vier Sammelschienen einen Schaltkreis bildet. Eine der Sammelschienen ist mit einem Erdungsanschluss versehen. Drei Sammelschienen sind an einem Ende mit einem Batterieanschluss verbunden. Außerdem sind zwei Sammelschienen an einem Ende an einer Lampe und drei Sammelschienen an einem Ende mit einem Schiebeschalter angeschlossen.
Die DE 3102640 A1 zeigt eine sogenannte Lüsterklemme mit einer Halterung aus Isoliermaterial und zwei Klemmen für den Anschluss der Phasenleiter. Für den Masseanschluss ist ein Kontaktstreifen aus elektrisch leitendem Material vorgesehen, der an einem seiner Enden der Halterung zugeordnet ist und am anderen Ende eine Öse für den Anschluss an dem Metallteil des Gerätes, auf dem die Halterung angebracht ist, aufweist.
Die US 6716 040 B1 offenbart eine Leiterplatte, die in einem Gehäuse angeordnet ist und über ein Erdungselement mit einer elektrischen Masse verbunden ist.

### Vorteile der Erfindung

Die erfindungsgemäße Vorrichtung zum Fördern von Kraftstoff mit einer Masseverbindung mit den kennzeichnenden Merkmalen des Hauptanspruchs hat demgegenüber den Vorteil, dass auf einfache Art und Weise eine Verbesserung dahingehend erzielt wird, dass die Montage der Masseverbindung vereinfacht wird, indem die Masseverbindung erfindungsgemäß als ein Flachteil mit rechteckförmigem Querschnitt ausgebildet ist. Weiterhin ist das Flachteil erfindungsgemäß aus Metall oder elektrisch leitendem Kunststoff hergestellt. Beispielsweise ist das Flachteil aus einem Blech gefertigt. Außerdem ist das Flachteil erfindungsgemäß mit einem Steckerpin eines Anschlusssteckers der Vorrichtung verbunden, wobei der Steckerpin mit einem elektrischen Minuspol einer Spannungsquelle kontaktiert ist. Auf diese Weise ist eine wirkungsvolle Erdung der elektrisch leitenden Teile erreicht, und können elektrostatische Aufladungen an den geerdeten Teilen dadurch verhindert werden. Die Vorrichtung weist einen elektrisch nichtleitenden Tankflansch und einen mit dem Tankflansch über zumindest eine elektrisch leitende Führung verbundenen elektrisch nichtleitenden Speicherbehälter auf, in dem ein Förderaggregat angeordnet ist.

Durch die erfindungsgemäße Ausführung ist die Masseverbindung sehr einfach, beipielsweise durch Clipsen, an der Vorrichtung montierbar. Durch die mechanische Verbindung der Masseverbindung an die Vorrichtung werden auch gleich die elektrischen Kontakte zur elektrischen Masse und zu den elektrisch leitenden Teilen hergestellt.

Durch die in den Unteransprüchen aufgeführten Maßnahmen sind vorteilhafte Weiterbildungen und Verbesserungen der im Hauptanspruch angegebenen Masseverbindung möglich.

Besonders vorteilhaft ist, wenn das Flachteil alle elektrisch leitenden Teile in der elektrisch nichtleitenden Vorrichtung mit der elektrischen Masse verbindet, da auf diese Weise elektrostatische Aufladungen am sichersten vermieden werden.

Sehr vorteilhaft ist es, wenn das Flachteil an die elektrisch nichtleitende Vorrichtung geclipst, gesteckt, geklebt oder gepresst ist, da auf diese Weise eine besonders einfache Montage der Masseverbindung erreicht ist.

Gemäß einer anderen Ausführung ist das Flachteil in der elektrisch nichtleitenden Vorrichtung zumindest abschnittsweise eingegossen.

Des weiteren vorteilhaft ist, wenn das Flachteil über eine Steckverbindung, Rastverbindung oder Pressverbindung mit dem Steckerpin des Anschlusssteckers und/oder mit dem zumindest einen elektrisch leitenden Teil verbunden ist, da auf diese Weise eine besonders einfache Montage der Masseverbindung ermöglicht wird.

### Zeichnung

Ein Ausführungsbeispiel der Erfindung ist in der Zeichnung vereinfacht dargestellt und in der nachfolgenden Beschreibung näher erläutert. Es zeigen Fig.1 eine Vorrichtung zum Fördern von Kraftstoff, Fig.2 eine Ansicht eines Tankflansches mit einer erfindungsgemäßen Masseverbindung und Fig.3 die erfindungsgemäße Masseverbindung.

### Beschreibung des Ausführungsbeispiels

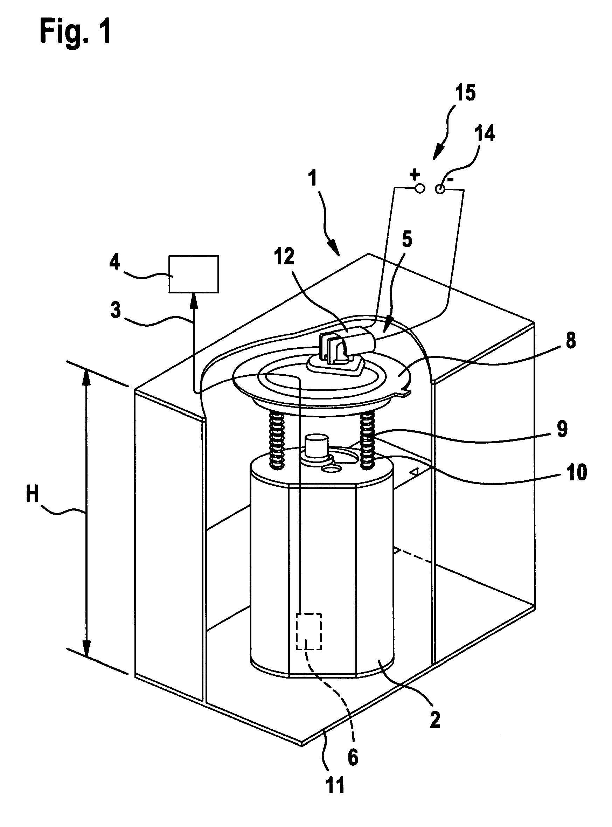

Fig.1 zeigt eine erfindungsgemäße Vorrichtung zum Fördern von Kraftstoff.

Die Vorrichtung zum Fördern von Kraftstoff ist in einem Vorratsbehälter 1, beispielsweise einem Kraftstoffbehälter eines Fahrzeugs, vorgesehen. Die Vorrichtung weist einen Speicherbehälter 2 und ein in dem Speicherbehälter 2 angeordnetes Förderaggregat 6 auf, das Kraftstoff aus dem Speicherbehälter 2 über eine Druckleitung 3 zu einer Brennkraftmaschine 4 fördert. Der Kraftstoff aus dem Vorratsbehälter 1 wird beispielsweise mittels einer bekannten, nicht dargestellten Saugstrahlpumpe in den Speicherbehälter 2 gefördert.

Der Vorratsbehälter 1 weist eine Tanköffnung 5 auf, durch die die Vorrichtung in den Vorratsbehälter 1 einsetzbar ist. Ein deckelförmiger Tankflansch 8 der Vorrichtung verschließt die Tanköffnung 5. Der Tankflansch 8 und der Speicherbehälter 2 sind über beispielsweise zwei Führungen 9 miteinander verbunden. Der Speicherbehälter 2 ist in den Führungen 9 beweglich gelagert, so dass der Abstand zwischen dem Tankflansch 8 und dem Speicherbehälter 2 variabel einstellbar ist. Zwischen dem Tankflansch 8 und dem Speicherbehälter 2 ist zumindest ein Federelement 10 vorgesehen, das den Speicherbehälter 2 in Richtung eines Tankbodens 11 des Vorratsbehälters 1 drückt. Beispielsweise sind zwei als Schraubenfeder ausgebildete Federelemente 10 vorgesehen, die die beiden Führungen 9 ringförmig umgeben. Gemäß dieser Ausführung ist die Vorrichtung für jeden Vorratsbehälter 1 unabhängig von seiner Höhe H verwendbar.

Am Tankflansch 8 ist ein Anschlussstecker 12 vorgesehen zur elektrischen Kontaktierung beispielsweise des Förderaggregates 6 mit einer elektrischen Spannungsquelle 15.

Der Tankflansch 8 und der Speicherbehälter 2 sind aus einem elektrisch nichtleitenden Material, beispielsweise Kunststoff, hergestellt. Die Führungen 9 bestehen aus einem elektrisch leitenden Material und sind beispielsweise metallisch.

Elektrisch leitende Teile von Vorrichtungen zum Fördern von Kraftstoff sind elektrisch zu erden, um elektrostatische Ladungen an den geerdeten Teilen der Vorrichtung abzuführen. Beim Stand der Technik werden die elektrisch leitenden Teile daher mittels von herkömmlichen elektrischen, isolierten Kabeln mit einem Minuspol 14 der elektrischen Spannungsquelle 15 verbunden und auf diese Weise geerdet. Wegen der aufwendigen Montage der Erdungskabel ist diese Lösung jedoch sehr teuer.

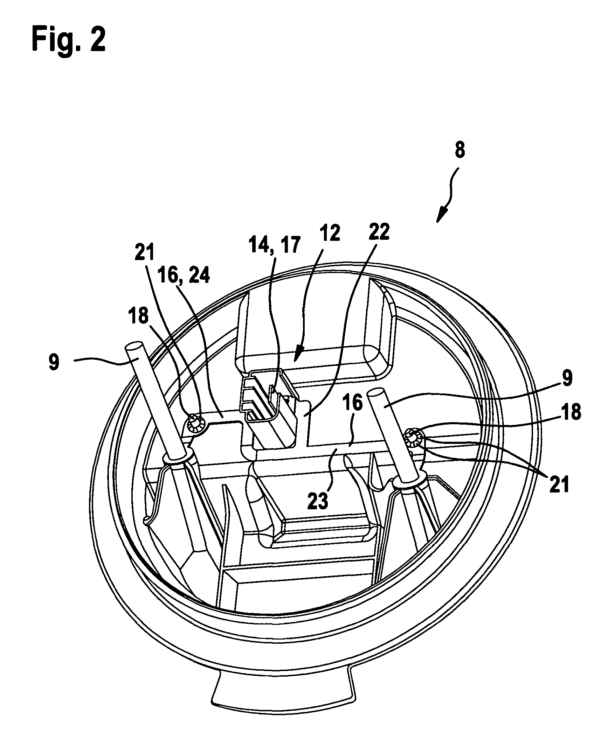

Fig.2 zeigt eine Ansicht eines Tankflansches mit einer erfindungsgemäßen Masseverbindung.

Bei der Vorrichtung nach Fig.2 sind die gegenüber der Vorrichtung nach Fig.1 gleichbleibenden oder gleichwirkenden Teile durch die gleichen Bezugszeichen gekennzeichnet.

Erfindungsgemäß ist daher vorgesehen, die Masseverbindung als ein beispielsweise blechförmiges Flachteil 16 mit einem rechteckförmigem Querschnitt auszubilden. Auf diese Weise wird die Montage der Masseverbindung 16 deutlich vereinfacht, da die Montage der Masseverbindung an der Vorrichtung und die Herstellung der elektrischen Kontakte mit dem Minuspol 14 und den elektrisch leitenden Teilen 9 in wenigen Montageschritten, beispielsweise in einem gemeinsamen Montageschritt, erfolgen.

Das Flachteil 16 ist beispielsweise aus Metall oder einem elektrisch leitenden Kunststoff hergestellt und hat beispeilsweise die Wandstärke eines Bleches. Nach einem Ausführungsbeispiel ist das Flachteil 16 durch Stanzen oder Laserschneiden aus einem metallischen Blech ausgeschnitten.

Das Flachteil 16 verbindet beispielsweise alle wesentlichen elektrisch leitenden Teile mit dem Minuspol 14 der Spannungsquelle 15. Die wesentlichen elektrisch leitenden Teile der Vorrichtung zum Fördern von Kraftstoff sind beispielsweise die Führungen 9 der Vorrichtung, da diese direkten Kontakt mit dem Kraftstoff haben.

Der Anschlussstecker 12 weist beispielsweise zwei Steckerpins 17 auf, die den Tankflansch 8 durchdringen und innerhalb des Speicherbehälters 2 mit dem Förderaggregat 6 kontaktierbar sind. Erfindungsgemäß ist das Flachteil 16 mit demjenigen Steckerpin 17 des Anschlusssteckers 12 kontaktiert, der mit der elektrischen Masse des Fahrzeugs, also mit dem Minuspol 14 der elektrischen Spannungsquelle 15, verbunden ist.

Das Flachteil 16 ist an den Tankflansch 8 beispielsweise geclipst, gesteckt, geklebt, gepresst oder auf ähnliche Art und Weise befestigt. Das Flachteil 16 kann aber auch abschnittsweise in den Tankflansch 8 eingegossen sein. Erfindungsgemäß werden die elektrischen Kontaktierungen der Masseverbindung 16 mit den elektrisch leitenden Teilen und/oder mit dem elektrischen Minuspol 14 der Spannungsquelle 15 gleichzeitig mit der Montage der Masseverbindung an der Vorrichtung hergestellt.

Beispielsweise sind an dem Tankflansch 8 zwei Stifte 18 ausgebildet, auf die das Flachteil 16 gesteckt wird Dabei werden Laschen 21 des Flachteils 16 gegen die Stifte 18 verklemmt bzw. gepresst, so dass eine feste Verbindung entsteht.

Das Flachteil 16 ist derart ausgeführt, dass es mit dem Aufstecken auf die Stifte 18 auch mit den Führungen 9 und mit dem dem Minuspol 14 entsprechenden Steckerpin 17 elektrisch verbunden wird. Dies ist beispielsweise erreicht, indem das Flachteil 16 durch eine kraftschlüssige und/oder formschlüssige Verbindung mit dem dem Minuspol 14 entsprechenden Steckerpin 17 und/oder mit den Führungen 9 verbunden wird. Beispielsweise erfolgt jeweils eine kraftschlüssige Steckverbindung.

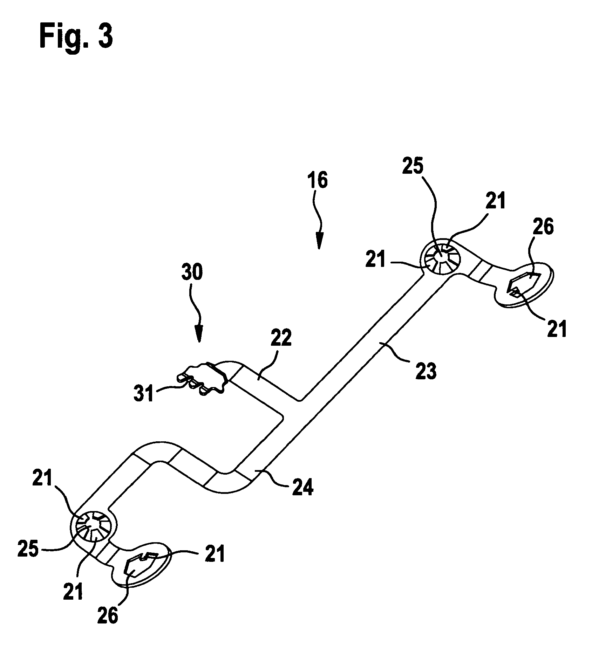

Fig.3 zeigt eine Ansicht der erfindungsgemäßen Masseverbindung.

Bei der Masseverbindung nach Fig.3 sind die gegenüber der Vorrichtung nach Fig. 1 und Fig.2 gleichbleibenden oder gleichwirkenden Teile durch die gleichen Bezugszeichen gekennzeichnet.

Die als Flachteil ausgeführte Masseverbindung 16 weist beispielsweise drei Schenkel auf, einen ersten Schenkel 22, der mit dem dem Minuspol 14 entsprechenden Steckerpin 17 kontaktiert wird, einen zweiten Schenkel 23 und einen dritten Schenkel 24, die jeweils mit einer der Führungen 9 verbunden werden.

Das Flachteil 16 weist zwei Montageöffnungen 25 auf, durch die nach der Montage an der Vorrichtung die Stifte 18 hindurchragen. Die Montageöffnungen 25 sind beispielsweise an dem zweiten Schenkel 23 und dem dritten Schenkel 24 vorgesehen. An den Monategeöffnungen 25 sind beispielsweise mehrere Laschen 21 vorgesehen, die mit den Stiften 18 zusammenwirken und eine feste Verbindung bilden.

Weiterhin hat das Flachteil 16 an den den Führungen 9 zugewandten Enden des zweiten Schenkels 23 und des dritten Schenkels 24 jeweils eine Kontaktierungsöffnung 26, durch die nach der Montage jeweils eine der Führungen 9 hindurchragt. An den Kontaktierungsöffnungen 26 ist beispielsweise jeweils eine Lasche 21 vorgesehen, die jeweils mit der Führung 9 derart zusammenwirkt, dass eine elektrische Kontaktierung erreicht ist.

An dem dem Steckerpin 17 zugewandten Ende des ersten Schenkels 22 ist beispielsweise eine Steckverbindung 30 mit einem Schlitz 31 vorgesehen, zwischen dem der dem Minuspol 14 entsprechende Steckerpin 17 einpressbar ist und auf diese Weise eine elektrische Verbindung bildet.

## Patentansprüche

1. Vorrichtung zum Fördern von Kraftstoff, die einen elektrisch nichtleitenden Tankflansch (8) und einen mit dem Tankflansch (8) über zumindest eine elektrisch leitende Führung (9) verbundenen elektrisch nichtleitenden Speicherbehälter (2) aufweist, in dem ein Förderaggregat (6) angeordnet ist, mit einer Masseverbindung (16) zur elektrischen Verbindung der elektrisch leitenden Führung (9) mit einer elektrischen Masse, **dadurch gekennzeichnet, dass** die Masseverbindung (16) als ein Flachteil mit rechteckförmigem Querschnitt ausgebildet ist, wobei das Flachteil (16) aus Metall oder elektrisch leitendem Kunststoff besteht und wobei das Flachteil (16) mit einem Steckerpin (17) eines Anschlusssteckers (12) der Vorrichtung verbunden ist und wobei der Steckerpin (17) mit einem elektrischen Minuspol (14) einer Spannungsquelle (15) kontaktiert ist.

2. Vorrichtung nach Anspruch 1, **dadurch gekennzeichnet, dass** das Flachteil (16) aus einem Blech hergestellt ist.

3. Vorrichtung nach Anspruch 1, **dadurch gekennzeichnet, dass** das Flachteil (16) alle elektrisch leitenden Teile (9) der Vorrichtung mit der elektrischen Masse verbindet.

4. Vorrichtung nach Anspruch 1, **dadurch gekennzeichnet, dass** das Flachteil (16) an den Tankflansch (8) geclipst, gesteckt, geklebt oder gepresst ist.

5. Vorrichtung nach Anspruch 1, **dadurch gekennzeichnet, dass** das Flachteil (16) in den Tankflansch (8) zumindest abschnittsweise eingegossen ist.

6. Vorrichtung nach Anspruch 1, **dadurch gekennzeichnet, dass** das Flachteil (16) über eine Steckverbindung, Rastverbindung oder Pressverbindung mit dem Steckerpin (17) des Anschlusssteckers (12) und/oder mit der Führung (9) verbunden ist.

## Claims

1. Apparatus for delivering fuel, which apparatus has an electrically non-conductive tank flange (8) and a electrically non-conductive storage container (2) which is connected to the tank flange (8) by means of at least one electrically conductive guide (9) and in which a delivery assembly (6) is arranged, having an earth connection (16) for electrically connecting the electrically conductive guide (9) to an electrical earth, **characterized in that** the earth connection (16) is in the form of a flat part with a rectangular cross section, with the flat part (16) being composed of metal or electrically conductive plastic, and with the flat part (16) being connected to a plug pin (17) of a connection plug (12) of the apparatus, and with an electrical negative pole (14) of a voltage source (15) making contact with the plug pin (17).

2. Apparatus according to Claim 1, **characterized in that** the flat part (16) is produced from a metal sheet.

3. Apparatus according to Claim 1, **characterized in that** the flat part (16) connects all the electrically conductive parts (9) of the apparatus to the electrical earth.

4. Apparatus according to Claim 1, **characterized in that** the flat part (16) is clipped, plug-connected, adhesively bonded or press-connected to the tank flange (8).

5. Apparatus according to Claim 1, **characterized in that** the flat part (16) is integrally cast in the tank flange (8) at least in sections.

6. Apparatus according to Claim 1, **characterized in that** the flat part (16) is connected to the plug pin (17) of the connection plug (12) and/or to the guide (9) by means of a plug connection, latching connection or press connection.

## Revendications

1. Dispositif refoulement de carburant, qui présente une bride de réservoir (8) non conductrice de l'électricité et un récipient de stockage (2) non conducteur de l'électricité connecté à la bride de réservoir (8) par le biais d'au moins un guide (9) conducteur de l'électricité, dans lequel récipient de stockage est disposée une unité de refoulement (6), avec une connexion à la masse (16) pour la connexion électrique du guide (9) conducteur de l'électricité à une masse électrique, **caractérisé en ce que** la connexion à la masse (16) est réalisée sous forme de partie plate de section transversale rectangulaire, la partie plate (16) se composant de métal ou d'un plastique conducteur de l'électricité et la partie plate (16) étant connectée à une fiche (17) d'un connecteur de raccordement (12) du dispositif et la fiche (17) étant amenée en contact avec un pôle négatif électrique (14) d'une source de tension (15).

2. Dispositif selon la revendication 1, **caractérisé en ce que** la partie plate (16) est fabriquée en tôle.

3. Dispositif selon la revendication 1, **caractérisé en ce que** la partie plate (16) relie toutes les parties conductrices de l'électricité (9) du dispositif à la masse électrique.

4. Dispositif selon la revendication 1, **caractérisé en ce que** la partie plate (16) est enclipsée, enfichée, collée ou pressée sur la bride de réservoir (8).

5. Dispositif selon la revendication 1, **caractérisé en ce que** la partie plate (16) est coulée au moins en partie dans la bride de réservoir (8).

6. Dispositif selon la revendication 1, **caractérisé en ce que** la partie plate (16) est connectée par le biais d'une connexion par enfichage, d'une connexion par encliquetage, d'une connexion par pressage, à la fiche (17) du connecteur de raccordement (12) et/ou au guide (9).
